# EUROPÄISCHE PATENTANMELDUNG

(11) **EP 0 883 227 A2**
(43) Veröffentlichungstag der Anmeldung: **09.12.1998**
(21) Anmeldenummer: 98103072.9
(22) Anmeldetag: 21.02.1998
(51) Int. Cl.: H02K 7/116, H02K 11/00, H02K 5/22

(54) **Verstellantrieb, insbesondere für ein Schiebedach eines Kraftfahrzeugs**

(30) Priorität: 04.06.1997 DE 19723280
(71) Anmelder: ROBERT BOSCH GMBH, 70442 Stuttgart (DE)
(72) Erfinder: Steuer, Peter, 76149 Karlsruhe (DE)

(57) **Zusammenfassung**

Bekannte Verstellantriebe besitzen eine Schaltungsanordnung zur Steuerung eines Elektromotors, wobei zur elektrischen Kontaktierung der Schaltungsanordnung Steckkontakte vorgesehen sind, die in an der Schaltungseinrichtung vorgesehene Steckaufnahmen eingreifen. Aufgrund von unterschiedlichen Herstellungstoleranzen ist eine sichere Kontaktierung bei der Montage nur sehr aufwendig zu verwirklichen.

Der erfindungsgemäße Verstellantrieb (1) besitzt zur sicheren elektrischen Kontaktierung der Schaltungsanordnung (17) seitlich verschiebbare Kontaktfahnen (20), die aus einer Oberfläche (18) des Elektromotors (3) herausragend angeordnet sind, um von korrespondierend angeordneten Steckkontakte (30) der Schaltungsanordnung (17) während der Montage eines die Schaltungsanordnung (17) enthaltenden Elektrogehäuses (12) sicher kontaktiert zu werden.

Der erfindungsgemäße Verstellantrieb ist insbesondere für ein Schiebedach eines Kraftfahrzeugs vorgesehen.

## Beschreibung

### Stand der Technik

Die Erfindung geht aus von einem Verstellantrieb, insbesondere für ein Schiebedach eines Kraftfahrzeugs nach der Gattung des Anspruchs 1. Es ist bereits ein Verstellantrieb bekannt (DE-PS 43 23 946), der einen Elektromotor besitzt, um über ein Untersetzungsgetriebe ein Antriebsritzel anzutreiben, das über eine Verstelleinrichtung ein Schiebedach eines Kraftfahrzeugs bewegt. Das Untersetzungsgetriebe ist in einem Getriebegehäuseteil untergebracht, das an dem Elektromotor angeflanscht ist. Zur Steuerung des Elektromotors ist eine Schalteinrichtung vorgesehen, deren Schaltungskomponenten auf einer Platine aufgebracht sind. Die Platine ist ihrerseits in einem Elektrogehäuseteil untergebracht, das steckbar am Getriebegehäuseteil angebracht ist. Zur elektrischen Verbindung ist eine Steckverbindung am Getriebegehäuseteil befestigt, die zwei Kontaktfahnen aufweist, um über an der Platine vorgesehene Buchsenkontakte eine elektrische Verbindung zu dem Elektromotor herzustellen. Die Steckerkontakte sind dabei in einer an dem Getriebegehäuseteil angeformten Aufnahme angebracht und über elektrische Leitungen mit Anschlußklemmen des Elektromotors verbunden. Die Montage des Verstellantriebs erfolgt in der Weise, daß zunächst das Elektrogehäuseteil an dem Getriebegehäuseteil angebracht wird, wonach durch Einsetzen der Platine in das Elektrogehäuseteil und Aufschieben der Buchsenkontakte an der Leiterplatte an den vorgesehenen Steckkontakten eine elektrische Kontaktierung des Elektromotors erfolgt. Dabei ergibt sich der Nachteil, daß bei der Montage aufgrund von Toleranzen die Buchsenkontakte die Steckerkontakte nicht genau treffen, so daß es zu keiner zuverlässigen elektrischen Verbindung kommt. Schlimmstenfalls können die Steckerkontakte abgebogen werden, so daß keine Kontaktierung des Elektromotors erfolgt. Außerdem ist das Einführen der Platine in das Elektrogehäuseteil und Überwachung der elektrischen Kontaktierung aufwendig, wodurch sich die Produktionskosten erhöhen.

### Vorteile der Erfindung

Der erfindungsgemäße Verstellantrieb mit den kennzeichnenden Merkmalen des Anspruchs 1 hat demgegenüber den Vorteil, daß eine sichere Kontaktierung des Elektromotors mit der Platine gewährleistet wird. Dabei ist es in vorteilhafter Weise möglich, selbst hohe Toleranzunterschiede bei der Herstellung des Elektrogehäuseteils und der Steckkontakte auszugleichen, wobei stets eine sichere elektrische Verbindung gewährleistet wird. Besonders vorteilhaft ist außerdem eine wesentlich vereinfachte Montage des Elektrogehäuseteils, wodurch sich die Herstellungskosten weiter reduzieren lassen.

Durch die in den Unteransprüchen aufgeführten Maßnahmen sind vorteilhafte Weiterbildungen und Verbesserungen des im Anspruch 1 angegebenen Verstellantriebs möglich.

### Zeichnung

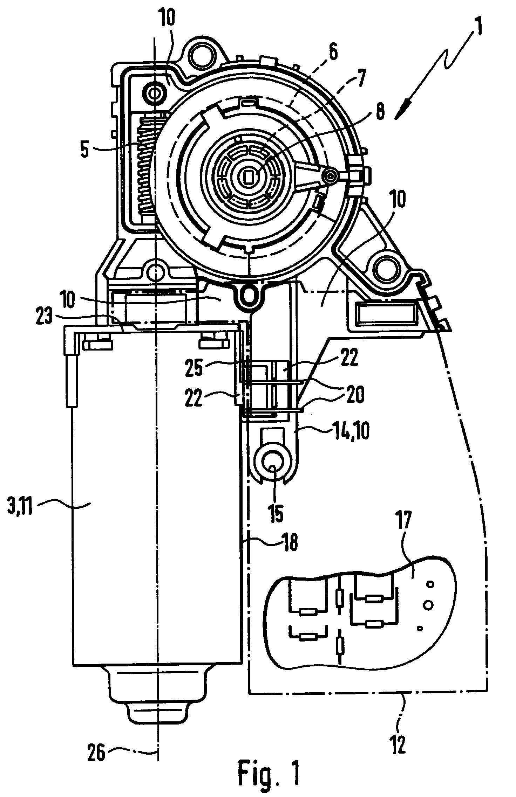

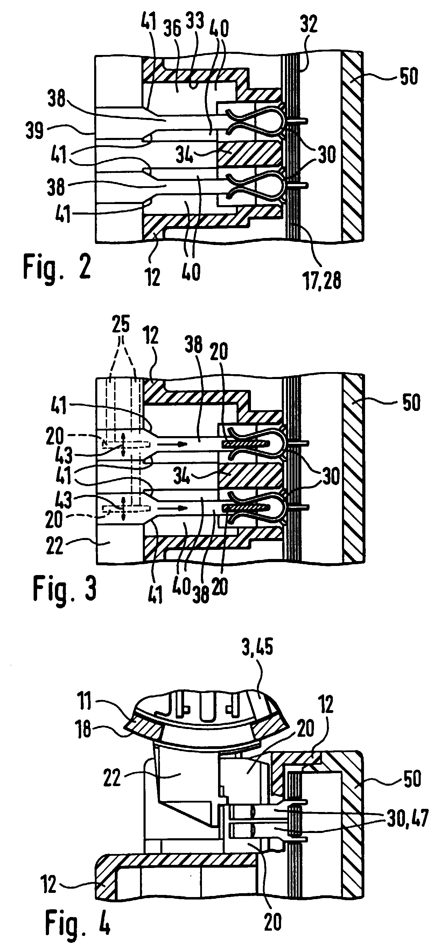

Ein Ausführungsbeispiel der Erfindung ist in der Zeichnung vereinfacht dargestellt und in der nachfolgenden Beschreibung näher erläutert. Es zeigen Figur 1 eine Draufsicht eines Verstellantriebs mit strichpunktiert angedeutetem Elektrogehäuse, Figur 2 eine Seitenansicht einer Schnittdarstellung durch das Elektrogehäuse in nicht kontaktiertem Zustand, Figur 3 eine Ansicht des Elektrogehäuses gemäß Figur 2 in kontaktiertem Zustand, Figur 4 eine Schnittdarstellung einer Queransicht des Verstellantriebs mit kontaktiertem Elektrogehäuse.

### Beschreibung des Ausführungsbeispiels

In Figur 1 ist ein Verstellantrieb 1 dargestellt, der insbesondere für ein Schiebedach eines Kraftfahrzeugs vorgesehen ist. Mittels des Verstellantriebs 1 wird über einen nicht näher dargestellten Stellmechanismus ein Deckel verschoben, der in einer Schließstellung eine Dachöffnung schließen und in einer Offenstellung eine Dachöffnung öffnen kann. Der Verstellantrieb 1 besitzt hierzu einen Elektromotor 3, der über ein Untersetzungsgetriebe, das vorzugsweise aus einer Schneckenwelle 5 und einem mit der Schneckenwelle 5 kämmenden, in Figur 1 gestrichelt eingezeichneten Schneckenrad 6 besteht. Das Schneckenrad 6 steht in drehfester Verbindung mit einem an einer Welle 8 angebrachten, in Figur 1 gestrichelt eingezeichneten Antriebsritzel 7, das seinerseits über einen nicht näher dargestellten Mechanismus ein nicht näher dargestelltes Schiebedach eines Kraftfahrzeugs öffnen oder schließen kann. Das Untersetzungsgetriebe 6, 7 ist in einem Getriebegehäuse 10 untergebracht, das vorzugsweise als Metalldruckgußteil ausgebildet ist. Das Getriebegehäuse 10 ist an einem Motorgehäuse 11 des Elektromotors 3 angeflanscht. Das Getriebegehäuse 10 verfügt über einen länglichen Fortsatz 14, der eine Öffnung 15 aufweist. Die Öffnung 15 dient zur lösbaren Aufnahme eines in Figur 1 strichpunktiert angedeuteten Elektrogehäuses 12. Das Elektrogehäuse 12 ist vorzugsweise als Kunststoffteil ausgebildet und dient zur Aufnahme einer Schaltungsanordnung 17, die aus einer Platine mit mehreren elektrischen Bauteilen besteht. Die Schaltungsanordnung 17 ist z. B. über eine Rastverbindung lösbar in dem Elektrogehäuse 12 untergebracht. Das Motorgehäuse 11 hat eine zylindrische Form und besitzt zur Kontaktierung des Elektromotors 3 von seiner Oberfläche 18 etwa rechtwinklig seitlich abstehende Kontaktfahnen 20. Die Kontaktfahnen 20 sind beispielsweise als Winkelteil ausgebildet und erstrecken sich in das Innere des Elektromotors 3. Die Kontaktfahnen 20 sind hierzu in einen Einschubteil 22 aus Kunststoff eingebracht, das beispielsweise von einer Stirnfläche 23 des Motorgehäuses 11 in den Elektromotor 3 eingeschoben ist. Das Einschubteil 22 verfügt über Schlitze 25 parallel zu einer Längsachse 26 des Elektromotors 3, durch die die Kontaktfahnen 20 nach außen ragen und die eine Bewegung der Kontaktfahnen 20 erlauben. In Figur 2, einer Schnittdarstellung einer Seitenansicht des Elektrogehäuses 12, ist dargestellt, daß an einer Platine 28 der Schaltungsanordnung 17 zwei spangenförmige Steckkontakte 30 vorgesehen sind, die vorzugsweise an einer dem Elektromotor 3 abgewandten Rückseite 32 mit Leiterbahnen beispielsweise verlötet sind. Bei in das Elektrogehäuse 12 eingebrachter Schaltungsanordnung 17 liegen die Steckkontakte 30 in einer Einwölbung 33 des Elektrogehäuses 12. Die Einwölbung 33 verfügt über einen Trennsteg 34, der beide Steckkontakte 30 voneinander beabstandet. An einer Innenfläche 36 der Einwölbung 33 sind des weiteren zwei Nuten 38 ausgearbeitet, die sich zu einer Unterfläche 39 des Elektrogehäuses 12 hin erweitern. Die beiden Nuten 38 bilden somit Einführschienen bzw. Leitelemente für die beiden Kontaktfahnen 20 bei der Kontaktierung mit den Steckkontakten 30. Die Einführschienen bzw. Nuten 38 werden von entsprechend begrenzenden Erhebungen 40 gebildet.

Wie in Figur 3, einer Ansicht der Figur 2 mit eingebrachten Kontaktfahnen 20, näher dargestellt ist, werden die Kontaktfahnen 20 beim Aufsetzen des Elektrogehäuses 12 auf das Getriebegehäuse 10 etwa senkrecht zu den Kontaktfahnen 20 über zulaufende Flanken 41 der Erhebungen 40 in die Nuten 38 geführt, so daß sie in einer Verraststellung von den Steckkontakten 30 unter Federspannung aufgenommen werden. Durch die durch Pfeile 43 angedeutete seitliche Verschiebbarkeit der Kontaktfahnen 20 ergibt sich selbst bei größerem Versatz der Kontaktfahnen 20 zu den Nuten 38 stets eine gute Einfädelung der Kontaktfahnen 20 in die Steckkontakte 30 und damit sichere Kontaktierung der Kontaktfahnen 20 mit den Steckkontakten 30.

Wie in Figur 4, einer teilweisen Schnittdarstellung durch den Elektromotor 3 mit verrastetem Elektrogehäuse 12, näher dargestellt ist, verlaufen die Kontaktfahnen 20 in abgewinkelter Form zu einer Bürstenträgerplatte 45 des Elektromotors 3, wobei sie zumindest teilweise in den Kunststoff des Einschubteils 22 eingebunden sind. Die spangenförmigen Steckkontakte 30 sind beispielsweise geschlitzt, so daß zum Beispiel vier Federelemente 47 je Steckkontakt 30 jeweils eine Kontaktfahne 20 umklammern. Zur Abdichtung des Elektrogehäuses 12 ist beispielsweise ein Deckel 50 in das Elektrogehäuse 12 einsetzbar, der dabei beispielsweise auch das Getriebegehäuse 10 abdecken kann. Die Montage erfolgt vorzugsweise derart, daß zunächst die Schaltungsanordnung 17 in das Elektrogehäuse 12 eingebracht und dort verrastet wird. Anschließend wird das mit der Schaltungsanordnung 17 ausgestattete Elektrogehäuse 12 mittels einer in die Öffnung 15 des Getriebegehäuses 10 eingreifenden Rastverbindung an dem Getriebegehäuse 10 verrastet, wobei zugleich die Steckkontakte 30 die Kontaktfahnen 20 am Elektromotor 3 aufnehmen, um so eine elektrische Verbindung des Elektromotors 3 mit der Schaltungsanordnung 17 herzustellen. Abschließend kann der Deckel 50 auf das Elektrogehäuse 12 und das Getriebegehäuse 10 aufgesetzt werden.

## Patentansprüche

1. Verstellantrieb, insbesondere für ein Schiebedach eines Kraftfahrzeugs, mit einem Elektromotor, einer Schaltungsanordnung, die in einem separaten Gehäuseteil untergebracht ist, wobei zur Kontaktierung des Elektromotors an der Schaltungsanordnung entsprechende Steckkontakte ausgebildet sind, dadurch gekennzeichnet, daß seitlich abstehend und beweglich gelagert am Elektromotor (3) Kontaktfahnen (20) angeordnet sind, die in die Steckkontakte (30) der Schaltungsanordnung (17) mittels wenigstens einem Leitelement (38) eingeführt sind.

2. Verstellantrieb nach Anspruch 1, dadurch gekennzeichnet, daß die Steckkontakte (30) der Schaltungsanordnung (17) in eine Einwölbung (33) des Gehäuseteils (12) ragen.

3. Verstellantrieb nach Anspruch 2, dadurch gekennzeichnet, daß die Einwölbung (33) über Nuten (38) verfügt, in welchen die Kontaktfahnen (20) des Elektromotors (3) bei der Kontaktierung gleiten.

4. Verstellantrieb nach Anspruch 3, dadurch gekennzeichnet, daß die Nuten (38) einen sich zu den Kontaktfahnen (20) erweiternden Abschnitt (41) aufweisen.

5. Verstellantrieb nach Anspruch 1, dadurch gekennzeichnet, daß die Kontaktfahnen (20) in ein am Elektromotor (3) vorgesehenes Kunststoffteil (22) eingebunden sind.

6. Verstellantrieb nach Anspruch 5, dadurch gekennzeichnet, daß das Kunststoffteil (22) über Schlitze (25) verfügt, durch welche die Kontaktfahnen ragen und in welchen die Kontaktfahnen (20) in Richtung einer Längsachse (26) des Elektromotors (3) seitlich verschiebbar geführt sind.

7. Verstellantrieb nach Anspruch 1, dadurch gekennzeichnet, daß die Steckkontakte (30) spangenförmig ausgebildet sind und die Kontaktfahnen (20) federelastisch aufnehmen.

8. Verstellantrieb nach Anspruch 1, dadurch gekennzeichnet, daß die Kontaktfahnen (20) winkelförmig ausgebildet sind und zu Bürsten des Elektromotors (3) führen.
